# EUROPEAN PATENT SPECIFICATION

(11) **EP 4 432 008 B1**
(45) Date of publication and mention of the grant of the patent: **14.10.2026**
(21) Application number: 22906562.8
(22) Date of filing: 13.12.2022
(51) Int. Cl.: G03H 1/22, G03B 21/00, G03B 21/20, F21S 41/16, F21S 41/64, B60Q 1/14, G03H 1/08

(54) **PROJECTION DEVICE, VEHICLE LAMP AND VEHICLE**
PROJEKTIONSVORRICHTUNG, FAHRZEUGLAMPE UND FAHRZEUG
DISPOSITIF DE PROJECTION, PHARE DE VÉHICULE ET VÉHICULE

(30) Priority: 13.12.2021 CN 202111520772
(43) Date of publication of application: 18.09.2024
(73) Proprietor: Yinwang Intelligent Technologies Co., Ltd., Shenzhen, Guangdong 518129 (CN)
(72) Inventor: CHEN, Ruishan, Shenzhen, Guangdong 518129 (CN); ZHAO, Han, Shenzhen, Guangdong 518129 (CN); DENG, Ning, Shenzhen, Guangdong 518129 (CN)
(74) Representative: Gill Jennings & Every LLP
(86) International application number: PCT/CN2022/138708
(87) International publication number: WO 2023/109817

(56) References cited:
- CN-A- 103 309 132
- CN-A- 103 425 034
- CN-A- 104 155 834
- CN-A- 106 227 016
- CN-A- 106 524 036
- CN-A- 109 789 782
- CN-A- 110 325 402
- CN-U- 213 517 870
- DE-A1- 102016 107 011
- US-A1- 2009 207 466
- US-A1- 2018 245 762
- US-A1- 2021 381 671

## Description

### TECHNICAL FIELD

This application relates to the field of display technologies, and in particular, to a projection apparatus, a vehicle light, and a vehicle.

### BACKGROUND

With the development of the global economy, motor vehicle penetration increases progressively year by year, accompanied by more serious driving safety risks. Especially, a driver often turns on a high beam headlight to expand a field of view when driving at night. In this case, when vehicles meet or overtake each other, the high beam headlight dazzles a driver of an oncoming vehicle or an oncoming pedestrian, making it more possible for occurrence of a traffic accident. To prevent the other driver and pedestrian from feeling dizzy, it is necessary for a vehicle light to have an adaptive driving light (Adaptive Driving Beam, ADB) function.

In addition to the ADB function, it is learned in a conventional technology that a projection system can project a pattern to the ground in front of a motor vehicle to generate an image to interact with another traffic participant like a driver of an oncoming vehicle or a pedestrian (for example, used as a warning signal, a prompt signal, an arrow, a triangle, or a text), to ensure a kept distance between vehicles, provide better driving experience, improve driving safety and pedestrian safety, and reduce a traffic accident rate.

However, the conventional technology provides a solution where a high beam headlight (including an ADB function), a low beam headlight, and a projection system in a vehicle light correspond to three light groups and three optical systems. In this case, system complexity is high, with high costs and a large size.

In the prior art, US2018/245762A1 relates to a lighting apparatus for a motor vehicle that includes one or more light sources and an optical device that is configured such that a first light distribution is produced in an intermediate image plane from light beams originating from the one or more light sources, and in that a second light distribution in the form of a target light distribution is generated in front of the illumination apparatus from the first light distribution; DE102016107011A1 relates to an optical arrangement for a headlight comprising at least one laser light source and a diffractive optical element designed to diffract light emitted by the laser light source into several diffractive orders; and US2021/381671A1 relates to an in-vehicle headlight that changes a light distribution pattern without any mechanical configuration.

### SUMMARY

This application provides a projection apparatus. The projection apparatus may be applied to a vehicle light system of a motor vehicle, to implement functions such as high beam illumination including an ADB function, low beam illumination, and projection interaction, and resolve a problem that an existing vehicle light has high complexity, high costs, and a large size.

According to a first aspect, this application provides a projection apparatus. The projection apparatus includes a three-primary-color light source, a collimation component, a spatial light modulator component, and a projection lens. The three-primary-color light source is configured to send a three-primary-color light beam to the collimation component. The three-primary-color light beam includes red light, green light, and blue light. The collimation component is configured to: collimate the three-primary-color light beam, and send the collimated three-primary-color light beam to the spatial light modulator component. The spatial light modulator component is configured to: perform phase modulation on received three-primary-color light beam, and converge modulated light beams on a focal plane of the projection lens, to form a to-be-projected hologram. The projection lens is configured to project the to-be-projected hologram.

In an embodiment of this application, the spatial light modulator component performs phase modulation on the three-primary-color light beam, to obtain the to-be-projected hologram. Energy utilization may reach 80% or even more, and the energy utilization is significantly improved. In addition, when the projection apparatus is used in a motor vehicle, functions such as high beam illumination, low beam illumination, and customized pattern projection may be implemented. There is no need to use three independent optical systems to respectively implement the three functions. The projection apparatus has advantages such as a more compact structure, a smaller size, lower costs, and higher efficiency.

With reference to the first aspect, in a first possible implementation of the first aspect, a holographic plane of the spatial light modulator component coincides with the focal plane of the projection lens, so that a projected pattern remains clear and stable.

With reference to the first aspect or the first possible implementation of the first aspect, in a second possible implementation of the first aspect that is not claimed, the spatial light modulator component includes a spatial light modulator, and the spatial light modulator loads a computer generated hologram (CGH), performs phase modulation on the received three-primary-color light beam, and converges the modulated light beams on the focal plane of the projection lens, to form the to-be-projected hologram. In this embodiment, a convergence function is superimposed in the CGH. After the spatial light modulator performs phase modulation on the received three-primary-color light beam, output light beams are converged, to form the to-be-projected hologram. A structure is very simple.

Certainly, the convergence function may alternatively not be superimposed in the CGH, and the convergence function is implemented by adding a convergence component. In this case, the spatial light modulator component includes a spatial light modulator and a convergence component. After the spatial light modulator loads the CGH and performs phase modulation on the three-primary-color light beam, the convergence component separately converges the modulated three-primary-color light beams, to obtain the to-be-projected hologram. The convergence component 132 may be a lens, or may be a lens group including a plurality of lenses.

Further, if a frequency of loading the CGH onto the spatial light modulator or a switching frequency of light of three colors is greater than 75 Hz, a person does not feel dizzy, and human eyes perceive white illumination effect obtained by superimposing three colors of red, green, and blue.

For example, the three-primary-color light source includes at least one red light source, at least one green light source, and at least one blue light source, or the three-primary-color light source 110 may include at least one tunable light source, and may send the red light, the green light, and the blue light at different time points. The monochromatic light source and the tunable light source may be any one of related or partially related light sources such as an optical fiber laser, a solid-state laser, a semiconductor laser, and even a light-emitting diode (Light-emitting diode, LED).

With reference to the first aspect or the first possible implementation of the first aspect, in a third possible implementation of the first aspect that is not claimed, the spatial light modulator component includes three spatial light modulators and a beam combiner, the three spatial light modulators are respectively in a one-to-one correspondence with the red light, the green light, and the blue light, and each spatial light modulator loads a CGH corresponding to a light beam of a corresponding color, performs phase modulation on the light beam of the corresponding color, and outputs a converged light beam of the corresponding color; and the beam combiner is configured to combine modulated red light, green light, and blue light into one beam of light, to obtain the to-be-projected hologram.

For example, a convergence function may not be superimposed in the CGH, and the convergence function is implemented by adding a convergence component. In this case, the spatial light modulator component includes three spatial light modulators, the convergence component, and the beam combiner. The three spatial light modulators are respectively in a one-to-one correspondence with the red light, the green light, and the blue light. Each spatial light modulator loads a CGH corresponding to a light beam of a corresponding color, and performs phase modulation on the light beam of the corresponding color. The convergence component is configured to separately converge modulated red light, green light, and blue light. The beam combiner is configured to combine converged red light, green light, and blue light into one beam of light, to obtain the to-be-projected hologram.

The spatial light modulator component includes a spatial light modulator and a beam combiner, three different areas of the spatial light modulator are respectively in a one-to-one correspondence with the red light, the green light, and the blue light, and each area loads a CGH corresponding to a light beam of a corresponding color, performs phase modulation on the light beam of the corresponding color, and outputs a converged light beam of the corresponding color; and the beam combiner is configured to combine modulated red light, green light, and blue light into one beam of light, to obtain the to-be-projected hologram.

Further, because the three spatial light modulators or the three areas of the spatial light modulator may simultaneously perform phase modulation on the received light beam, a refresh rate of the CGH is greater than 25 Hz, human eyes do not feel flickering, and a person does not feel dizzy.

For example, in the third or fourth possible implementation, the three-primary-color light source includes at least one red light source, at least one green light source, and at least one blue light source. The monochromatic light source and the tunable light source may be any one of related or partially related light sources such as an optical fiber laser, a solid-state laser, a semiconductor laser, and even an LED.

In the foregoing two embodiments, light beams of three colors may be output simultaneously. One spatial light modulator corresponds to light of one color, or one area of the spatial light modulator corresponds to light of one color. The three-primary-color light source and the spatial light modulator do not need to be synchronously controlled, and a control algorithm is simple.

With reference to any one of the second to the fourth possible implementations of the first aspect, in a fifth possible implementation of the first aspect, the projection apparatus is applied to a vehicle, and the projection apparatus further includes a controller, configured to: generate the CGH based on a signal transmitted by a sensing apparatus on the vehicle, and load the CGH onto the spatial light modulator. The vehicle includes but is not limited to a motor vehicle, a ship, an airplane, and the like.

With reference to the fifth possible implementation of the first aspect, in a sixth possible implementation of the first aspect, when the projection apparatus on the vehicle is turned on, the controller loads an initial CGH onto the spatial light modulator, and then refreshes the CGH based on a signal transmitted by a sensing apparatus on a vehicle. The projection apparatus may implement real-time refreshing, and adjust an output light type based on information detected by the sensing apparatus, to improve driving safety.

With reference to any one of the second to the sixth possible implementations of the first aspect, in a seventh possible implementation of the first aspect, the spatial light modulator is a polarization dependent device, the projection apparatus further includes a polarization conversion system (PCS), and the PCS is located between the three-primary-color light source and the spatial light modulator, and is configured to adjust a polarization state of light of each color output by the three-primary-color light source to be consistent with a polarization state required by the spatial light modulator, to improve working efficiency of the spatial light modulator.

With reference to the first aspect or the first or the second possible implementation of the first aspect, in an eighth possible implementation of the first aspect that is not claimed, light of different colors in the three-primary-color light beam reaches the spatial light modulator component at different time points. When the red light reaches the spatial light modulator, a CGH corresponding to the red light is loaded onto the spatial light modulator. When the green light reaches the spatial light modulator, a CGH corresponding to the green light is loaded onto the spatial light modulator. When the blue light reaches the spatial light modulator, a CGH corresponding to the blue light is loaded onto the spatial light modulator.

With reference to the eighth possible implementation of the first aspect, in a ninth possible implementation of the first aspect that is not claimed, a difference between incident angles at which the light of different colors in the three-primary-color light beam is incident on the spatial light modulator component falls within 10° or 5°, to ensure that imaging effect is good enough. In addition, a smaller incident angle between the spatial light modulator 131 and an incident direction in which light of three colors is incident on the spatial light modulator 131 leads to higher modulation efficiency. Usually, the included angle does not exceed 40°.

With reference to any one of the foregoing possible implementations, in a tenth possible implementation of the first aspect, the projection apparatus is applied to the vehicle, the projection lens projects the to-be-projected hologram, and the to-be-projected hologram includes any one or more of light intensity distribution information of a high beam headlight, light intensity distribution information of a low beam headlight, and a customized pattern. In other words, the projection apparatus may implement at least one function in high beam illumination, low beam illumination, and pattern projection. There is no need to use three independent optical systems to respectively implement the three functions. The projection apparatus has advantages such as a more compact structure, a smaller size, and lower costs.

With reference to any one of the foregoing possible implementations, in an eleventh possible implementation of the first aspect, the three-primary-color light source sends the three-primary-color light beam to the collimation component through at least one optical fiber or optical waveguide. The three-primary-color light source may be remotely deployed at another position, to help save space and dissipate heat. For example, when the projection apparatus is applied to the vehicle, the three-primary-color light source may be remotely deployed at a position at which there is large space in the vehicle, to help dissipate heat and fully use space.

According to a second aspect, this application provides a vehicle light. The vehicle light includes the projection apparatus according to any one of the first aspect and all the possible implementations of the first aspect. The vehicle light in this embodiment may implement functions of high beam illumination, low beam illumination, and pattern projection. This is equivalent to integrating three illumination systems, leading to a simpler structure and lower costs.

According to a third aspect, this application provides a vehicle, including the projection apparatus according to any one of the first aspect and all the possible implementations of the first aspect. The vehicle includes but is not limited to a vehicle, a ship, an airplane, and the like.

With reference to the third aspect, in a first possible implementation of the third aspect, the vehicle includes a sensing apparatus, configured to detect various information in an advancing direction. A motor vehicle is used as an example. The detected information includes but is not limited to a position of a traffic participant like an oncoming vehicle, an obstacle, an animal, a traffic light, or a pedestrian. The spatial light modulator component performs phase modulation on a received light beam based on the detected information, to form different holograms, and project different light types.

For example, the sensing apparatus includes any one or more of a camera device, a camera, a lidar, and a millimeter-wave radar.

According to a fourth aspect, this application provides a projection method, applied to a projection apparatus. The projection apparatus includes a three-primary-color light source, a collimation component, a spatial light modulator component, and a projection lens. The projection method includes: The three-primary-color light source generates a three-primary-color light beam. The three-primary-color light beam includes red light, green light, and blue light. The collimation component collimates the three-primary-color light beam. The spatial light modulator component performs phase modulation on the collimated three-primary-color light beam, and converges modulated light beams on a focal plane of the projection lens, to form a to-be-projected hologram. The projection lens projects the to-be-projected hologram.

In embodiments of this application, the spatial light modulator component performs phase modulation on the three-primary-color light beam, to obtain the to-be-projected hologram. Energy utilization may reach 80% or even more, and the energy utilization is significantly improved. In addition, the projection apparatus may output a plurality of different light types. An example in which the projection apparatus is used in a motor vehicle is used. The projection apparatus may implement any one or more of functions such as high beam illumination, low beam illumination, and customized pattern projection, or may even implement all the three functions. There is no need to use three independent optical systems to respectively implement the three functions. The projection apparatus has advantages such as a more compact structure, a smaller size, and lower costs.

### BRIEF DESCRIPTION OF DRAWINGS

FIG. 1 is a schematic diagram of a structure of a projection apparatus according to an embodiment of this application;
FIG. 2 is a schematic diagram of a structure of a projection apparatus according to another embodiment of this application;
FIG. 3 is a schematic diagram of a structure of a projection apparatus according to another embodiment of this application;
FIG. 4 is a schematic diagram of interaction between a projection apparatus and in-vehicle infotainment according to an embodiment of this application;
FIG. 5 is a schematic diagram of a structure of a projection apparatus which is not according to the claimed invention;
FIG. 6 is a schematic diagram of a structure of a projection apparatus which is not according to the claimed invention;
FIG. 7 is a schematic diagram of a structure of a projection apparatus which is not according to the claimed invention;
FIG. 8 is a schematic diagram of a structure of a projection apparatus which is not according to the claimed invention;
FIG. 9 is a schematic diagram of a structure of a projection apparatus which is not according to the claimed invention;
FIG. 10 is a schematic diagram of illumination effect of a vehicle light according to an embodiment of this application;
FIG. 11 is a schematic diagram of an iteration procedure of calculating a computer generated hologram (CGH) based on a holographic algorithm according to an embodiment of this application; and
FIG. 12 is a schematic diagram of a working procedure existing when a projection apparatus is used in a vehicle light system according to an embodiment of this application.

### DESCRIPTION OF EMBODIMENTS

The following describes in detail a projection apparatus provided in embodiments of this application with reference to the accompanying drawings.

The projection apparatus provided in embodiments of this application may be used in a vehicle light system of a motor vehicle, and has advantages of lower complexity, lower costs, and a smaller size; may also be used in a hardware system like an airplane, a ship, a train, or a robot, and has functions of projection imaging and display illumination; and may also be used in a device like a projector, a head-up display apparatus, or augmented reality (augmented reality, AR) eyeglasses, and has a function of projection imaging.

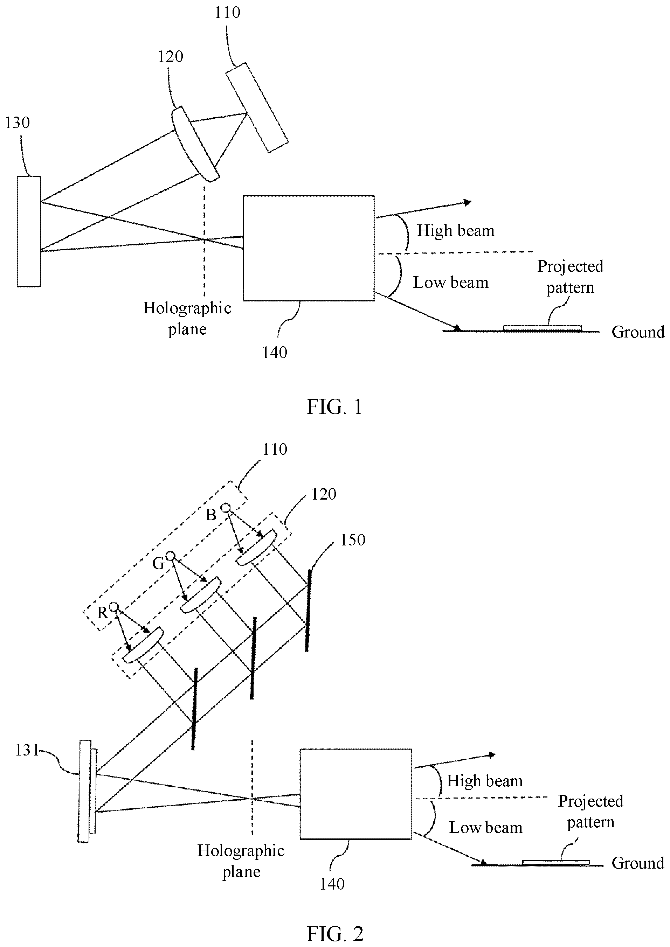

FIG. 1 is a schematic diagram of a structure of a projection apparatus according to an embodiment of this application. As shown in FIG. 1, the projection apparatus includes a three-primary-color light source 110, a collimation component 120, a spatial light modulator component 130, and a projection lens 140. The three-primary-color light source 110 is configured to: generate light beams of three colors, including red light, blue light, and green light, and send the three-primary-color light beam to the collimation component 120. The three-primary-color light beam may be sent to the collimation component 120 through an optical fiber or an optical waveguide, or the three-primary-color light beam may be sent to the collimation component 120 in a form of spatial light transmission. Then, the collimation component 120 collimates the three-primary-color light beam, and sends the collimated three-primary-color light beam to the spatial light modulator component 130. The collimation component 120 may be a collimation lens, or may be a collimation lens group including a plurality of lens. This is not limited in this embodiment. The spatial light modulator component 130 is configured to: perform phase modulation on received three-primary-color light beam, and converge modulated light beams on a focal plane of the projection lens 140, to form a to-be-projected hologram. The projection lens 140 projects the to-be-proj ected hologram. Herein, the projection lens 140 may be a combination of one or more lenses, prisms, reflectors, diaphragms, and the like. Further, as shown in FIG. 1, a focal plane on which modulated three-primary-color light beams are converged coincides with the focal plane of the projection lens 140. In other words, a focal plane of the spatial light modulator component 130 coincides with a front focal plane of the projection lens 140. An example in which the projection apparatus is used in a motor vehicle is used. The projection lens 140 may project light within a field of view (Field of view, FOV) range onto the front of the vehicle. An FOV meets requirements of a high beam headlight and a low beam headlight. An FOV in a horizontal direction of the high beam headlight may range from -20° to +20°, and an FOV in a horizontal direction of the low beam headlight may range from -40° to +40°.

It should be noted that, definition of a to-be-projected hologram formed on the focal plane of the spatial light modulator component 130 based on the three-primary-color light beam on which the spatial light modulator component 130 performs phase modulation is higher than definition at another position. The focal plane is referred to as a holographic plane, as shown by a dashed line position between the spatial light modulator component 130 and the projection lens 140 in FIG. 1. In other words, after the three-primary-color light beam passes through the spatial light modulator component 130, the hologram is generated on the holographic plane. The holographic plane coincides with the focal plane of the projection lens 140, so that a projected pattern remains clear and stable. It should be understood that, in FIG. 1, two light rays indicate transmission of light, and a position at which the two light rays intersect indicates a position of the holographic plane, and does not mean that all light is converged on a point on the holographic plane, but instead, means that a hologram is formed on the holographic plane. Similar processing is also performed in subsequent figures, and details are not described in this application. In addition, due to a process error, or the like, a deviation between the holographic plane and the focal plane of the projection lens 140 falls within the protection scope of this application.

In this embodiment of this application, the spatial light modulator component performs phase modulation on the three-primary-color light beam, to obtain the to-be-projected hologram. Energy utilization may reach 80% or even more, and the energy utilization is significantly improved. In addition, when the projection apparatus is used in a motor vehicle, the to-be-projected hologram may be projected onto the front of the vehicle by the projection lens 140, as shown in FIG. 1. It should be understood that, FIG. 1 shows that the to-be-projected hologram is projected onto the ground, or may be projected to another place like a wall. In this case, the to-be-projected hologram may include any one or more of light intensity distribution information of the high beam headlight, light intensity distribution information of the low beam headlight, and a customized pattern (for example, a pattern that has a prompt, a guest reception, or an interaction function like a zebra crossing, an arrow, a triangle, a marker of a manufacturer, or a text). In other words, the projection apparatus provided in this embodiment of this application integrates functions such as a high beam headlight with an adaptive driving beam (Adaptive Driving Beam, ADB) function, a low beam headlight, and customized pattern projection. There is no need to use three independent optical systems to implement the functions of the high beam headlight, the low beam headlight, and an intelligent projection light. The projection apparatus has advantages such as a more compact structure, a smaller size, and lower costs.

Specifically, the three-primary-color light source 110 may include at least one red light source, at least one green light source, and at least one blue light source, or the three-primary-color light source 110 may include at least one tunable light source, and may send the red light, the green light, and the blue light at different time points. The monochromatic light source and the tunable light source may be any one of related or partially related light sources such as an optical fiber laser, a solid-state laser, a semiconductor laser, and even a light-emitting diode (Light-emitting diode, LED). FIG. 2 is an example diagram of a structure of a projection apparatus. An example in which the three-primary-color light source 110 is three different monochromatic light sources is used for illustration. Light of three colors is input to the spatial light modulator component 130 at different time points, and is modulated to obtain a hologram. In this case, the collimation component 120 may be three collimation lenses or three collimation lens groups, configured to respectively collimate the three monochromatic light sources, or may be one collimation lens or collimation lens group, configured to collimate the three monochromatic light sources. This is not limited in this application.

In a specific projection apparatus, the spatial light modulator component 130 is a spatial light modulator 131, and may be a transmissive or reflective spatial light modulator. In this embodiment, the reflective spatial light modulator is used as an example. A structure of the projection apparatus is also shown in FIG. 2. Specifically, the spatial light modulator 131 may be a spatial light modulator that can implement phase modulation, for example, a liquid crystal display (liquid crystal display, LCD) or a liquid crystal on silicon (liquid crystal on silicon, LCoS), and does not need to have only one function of phase modulation, provided that phase modulation can be implemented. In addition, the spatial light modulator 131 may be a polarization independent device, or may be a polarization dependent device. If the spatial light modulator 131 is a polarization dependent device, a single-polarized three-primary-color light source 110 needs to output light in a polarization state that is consistent with a polarization state required by the spatial light modulator 131. Alternatively, light output by the three-primary-color light source 110 is not required to be in a single polarization state, but a polarization conversion system (polarization conversion system, PCS) needs to be added between the three-primary-color light source 110 and the spatial light modulator 131, and is configured to adjust a polarization state of light of each color emitted by the three-primary-color light source 110 to be consistent with a polarization state required by the spatial light modulator 131, for example, an s polarization state or a p polarization state. A requirement of the spatial light modulator in subsequent embodiments is also the same as that in this embodiment, and details are not described in this application.

The spatial light modulator 131 may load a computer generated hologram (computer generated hologram, CGH), to implement a phase modulation function, and output a converged light beam. In other words, the spatial light modulator 131 may converge, by loading the CGH, modulated light beams on the focal plane of the projection lens, to form the to-be-projected hologram. In this way, no convergence component needs to be added. leading to a simpler structure and lower costs. In addition, the spatial light modulator 131 integrates a light beam convergence function. Therefore, a focal plane exists. The focal plane of the spatial light modulator 131 may coincide with the focal plane of the projection lens 140, so that a projected pattern remains clear and stable. In this case, light of different colors in the three-primary-color light beam reaches the spatial light modulator 131 at different time points. A time division multiplexing technology is used, and light of each color corresponds to a different CGH. For example, when the red light reaches the spatial light modulator 131, a CGH corresponding to the red light needs to be loaded onto the spatial light modulator 131. To prevent a person from feeling dizzy, a frequency of loading the CGH onto the spatial light modulator 131 or a switching frequency of light of three colors needs to be high enough, for example, greater than 75 Hz. In this case, the person does not feel dizzy, and human eyes perceive white illumination effect obtained by superimposing three colors of red, green, and blue.

Optionally, light of three colors needs to be incident on the spatial light modulator 131 in a same incident direction, that is, incident angles at which the light is incident on the spatial light modulator 131 are the same. In this case, diffraction efficiency of the three colors is closer, and imaging effect after superposition is better. In addition, a specific deviation is not excluded. For example, a difference between incident angles at which light of three colors is input to the spatial light modulator 131 falls within 5°, 10°, or 20°. In addition, a smaller incidentangle between the spatial light modulator 131 and an incident direction in which light of three colors is incident on the spatial light modulator 131 leads to higher modulation efficiency. Usually, the included angle does not exceed 40°.

The projection apparatus may further include a dichroic mirror 150, which may also be referred to as a dichromatic mirror, configured to: reflect light of one color and transmit light of another color. In the structure shown in FIG. 2, three dichroic mirrors 150 respectively correspond to the three monochromatic light sources. A dichroic mirror 150 corresponding to the red light has a function of reflecting the red light and transmitting light of another color. A dichroic mirror 150 corresponding to the green light has a function of reflecting the green light and transmitting light of another color. A dichroic mirror 150 corresponding to the blue light has a function of reflecting the blue light and transmitting light of another color. Due to use of the dichroic mirror 150, a transmission direction of light of a corresponding color may be changed, so that light of three colors is incident on the spatial light modulator 131 in a same incident direction, and imaging effect is better.

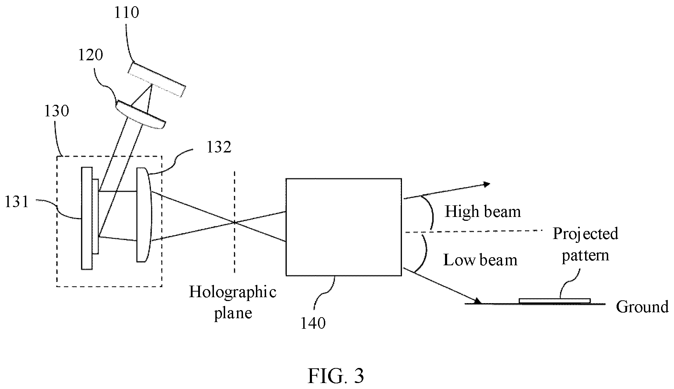

Optionally, the spatial light modulator component 130 includes a spatial light modulator 131 and a convergence component 132, and a structure is shown in FIG. 3. In this case, the spatial light modulator 131 no longer integrates the light beam convergence function. After loading the CGH, the spatial light modulator 131 separately performs phase modulation on received three-primary-color light beam, to obtain a modulated three-primary-color light beam, and then the convergence component 132 converges the modulated three-primary-color light beams, to obtain the to-be-projected hologram. A difference between this embodiment and the foregoing embodiment is that the convergence function in this embodiment is implemented by the convergence component 132, and the loaded CGH does not need to be superimposed with the convergence function. It should be understood that the convergence component 132 may be one lens, or may be a lens group including a plurality of lenses. This is not limited in this application.

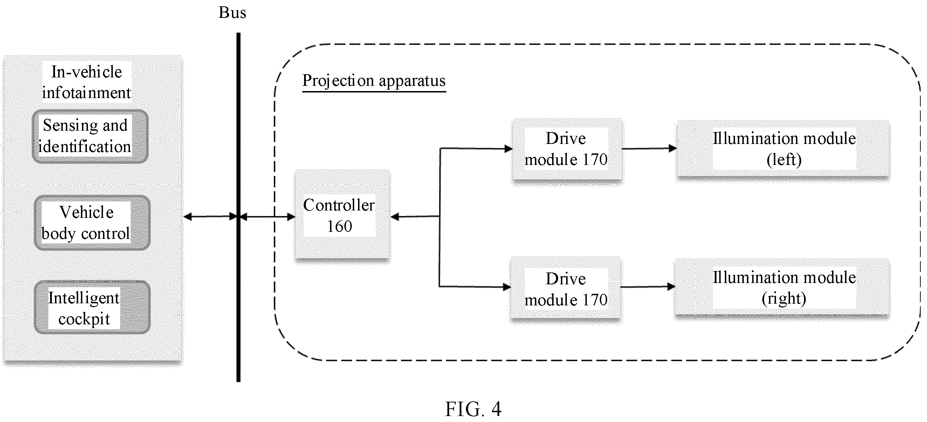

Optionally, the projection apparatus further includes a controller 160, configured to: generate the CGH, and load the CGH onto the spatial light modulator 131. An example in which the projection apparatus is used in a motor vehicle is used. FIG. 4 is a diagram of interaction between the projection apparatus and in-vehicle infotainment. The controller 160 communicates with the in-vehicle infotainment through a bus, receives sensing information from a sensing apparatus on the vehicle or control information from the in-vehicle infotainment, and then controls an illumination module to emit light. The illumination module in FIG. 3 may include the three-primary-color light source 110, the collimation component 120, the spatial light modulator component 130, and the projection lens 140. Functions of the three-primary-color light source 110, the collimation component 120, the spatial light modulator component 130, and the projection lens 140 are described in the foregoing embodiments, and are not described again in this embodiment. Usually, the projection apparatus further includes a drive module 170. The controller 160 controls the drive modules 170, to implement control of the three-primary-color light source 110 and the spatial light modulator 131. Specifically, when the projection apparatus is turned on, the controller 160 loads an initial CGH onto the spatial light modulator 131 by using the drive modules 170, to form an initial light output to illuminate a road surface. Then, the CGH is refreshed based on a signal transmitted by the sensing apparatus on the vehicle, thereby adjusting effect of output light based on a road condition. For example, when a pedestrian appears in front, a part of a high beam that is irradiated to the pedestrian may be turned off, to prevent the pedestrian from feeling dizzy, or may be projected onto a zebra crossing, to provide a communication and warning function. Alternatively, the CGH may be refreshed according to an instruction transmitted by the in-vehicle infotainment, to project a guest reception pattern, for example, words "Welcome aboard".

It should be noted that light beams of three colors respectively correspond to three different CGHs. In the foregoing embodiments, the red light, the green light, and the blue light are staggered in time, and reach the spatial light modulator 131 at different time points. Therefore, a CGH corresponding to each color also needs to be loaded onto the spatial light modulator 131 at a corresponding time period. In this case, the controller 160 further needs to implement a synchronization control function, to implement synchronization between output of light of a specific color and loading of a corresponding CGH, so that when light of a specific color reaches the spatial light modulator 131, a CGH corresponding to the light of the color is loaded. Specifically, when the red light reaches the spatial light modulator 131, a CGH corresponding to the red light is loaded onto the spatial light modulator 131. When the green light reaches the spatial light modulator 131, a CGH corresponding to the green light is loaded onto the spatial light modulator 131. When the blue light reaches the spatial light modulator 131, a CGH corresponding to the blue light is loaded onto the spatial light modulator 131.

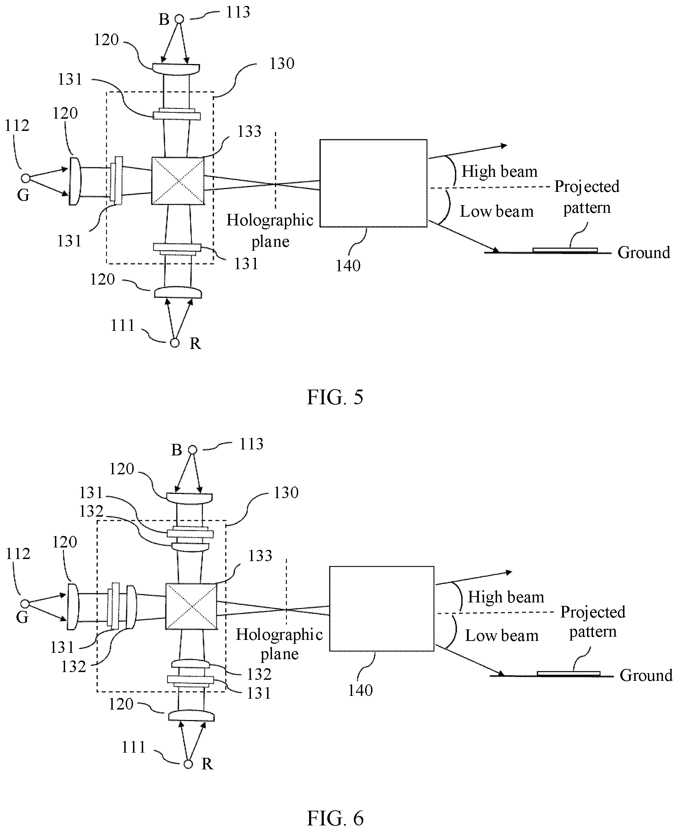

In addition to a manner in which light of three colors reaches the spatial light modulator 131 at different time points, the light of the three colors may alternatively reach at a same time point. In this case, a structure of the projection apparatus may be shown in FIG. 5. The projection apparatus also includes the three-primary-color light source 110, the collimation component 120, the spatial light modulator component 130, and the projection lens 140. The three-primary-color light source 110 includes at least one red light source 111, at least one green light source 112, and at least one blue light source 113, and may simultaneously send the red light, the green light, and the blue light. The monochromatic light source may be any one of related or partially related light sources such as an optical fiber laser, a solid-state laser, a semiconductor laser, and even an LED. The collimation component 120 may be one collimation lens or collimation lens group to collimate light of three different colors, or may be three different collimation lenses or three different collimation lens groups to respectively collimate light of three different colors. In FIG. 5, an example in which the collimation component 120 is three different collimation lenses is used for illustration. A function of the projection lens 140 is the same as that in the foregoing embodiments, and is not described in this embodiment.

The spatial light modulator component 130 may include three spatial light modulators 131 and a beam combiner 133. The three spatial light modulators 131 are respectively in a one-to-one correspondence with the red light, the green light, and the blue light, and light of each color corresponds to one CGH. Therefore, each spatial light modulator 131 corresponds to one CGH, and each spatial light modulator 131 loads a corresponding CGH, implements a function of performing phase modulation on a light beam of a corresponding color, and outputs a converged modulated light beam. The beam combiner 133 combines the red light, the green light, and the blue light into one beam of light after the red light, the green light, and the blue light pass through the spatial light modulator 131, to form a to-be-projected hologram. The beam combiner 133 herein may be implemented by a light combining prism (or referred to as an X prism or an X-CUBE). In this case, the red light, the green light, and the blue light respectively reach different spatial light modulators 131. A corresponding CGH loaded onto each spatial light modulator 131 may be calculated and refreshed in real time based on an actual road condition (for example, when the projection apparatus is applied to the field of motor vehicles, calculation and refreshing are performed based on a real-time road condition). Distribution of projected light intensity is also refreshed in real time. When a refresh rate of the CGH is large enough, for example, greater than 25 Hz, human eyes do not feel flickering.

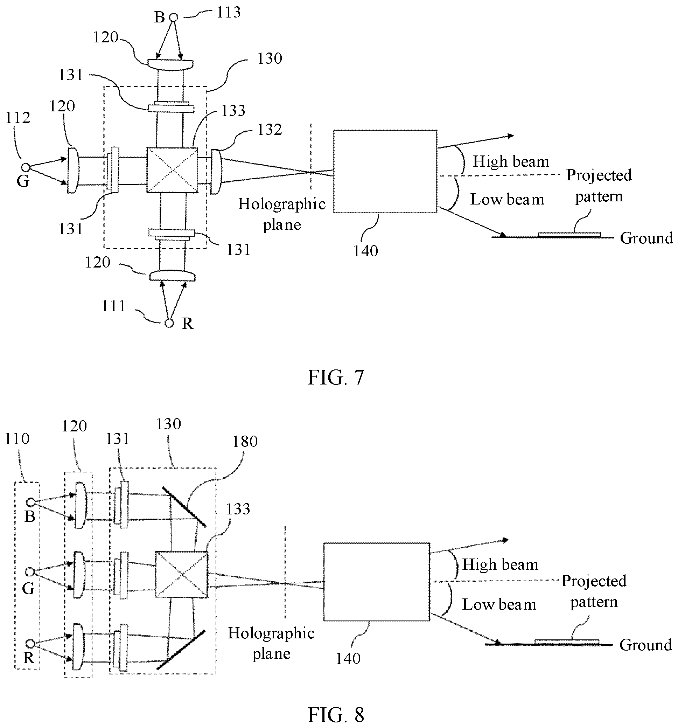

Optionally, the spatial light modulator component 130 may further include a convergence component 132, and a function of separately converging the red light, the green light, and the blue light is implemented by the convergence component 132. Light of three colors separately passes through the spatial light modulator 131 and the convergence component 132, is combined by the beam combiner 133, and is converged on the focal plane of the projection lens 140, to obtain the to-be-projected hologram. In this case, the convergence component 132 may be a lens or a lens group to converge all light of three colors, or may be three lenses or three lens groups to respectively converge light of three colors. An example in which the three lenses respectively converge light of three colors is used. In this case, a structure of the projection apparatus may be shown in FIG. 6. Alternatively, the convergence component 132 may be placed between the beam combiner 133 and the projection lens 140, and is configured to converge combined light, to obtain the to-be-projected hologram on the holographic plane. A structure of the projection apparatus is shown in FIG. 7.

Further, the projection apparatus may further include a reflector 180, and a structure of the projection apparatus is shown in FIG. 8. The reflector 180 is configured to change a transmission direction of light of a corresponding color, so that light sources of the red light, the blue light, and the green light may be placed close to each other, thereby saving space. In FIG. 8, the reflector 180 is located on a transmission path between the spatial light modulator 131 and the beam combiner 133, or may be located at another position. For example, a collimated light beam may pass through the reflector 180 and then pass through the spatial light modulator 131. A similar variation falls within the protection scope of this application.

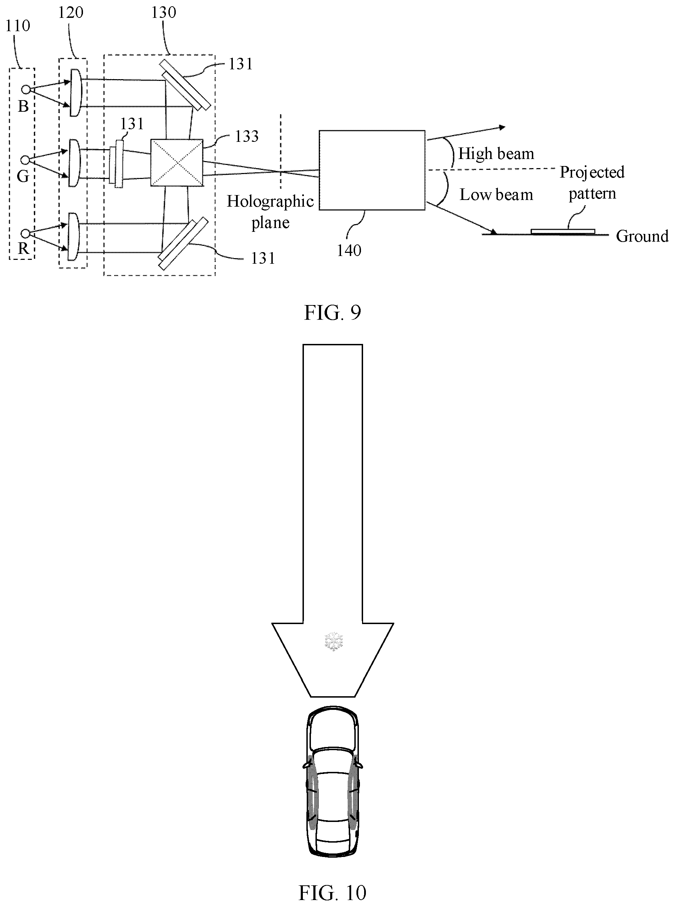

In addition, in FIG. 5 to FIG. 8, an example in which the three spatial light modulators 131 are all of a transmission type is used for illustration. However, alternatively, the three spatial light modulators 131 may be all of a reflection type, or may be partially of a transmission type and partially of a reflection type. FIG. 9 shows an example structure of a projection apparatus. One transmissive spatial light modulator 131 and two reflective spatial light modulators 131 are used, so that positions of light sources of the red light, the blue light, and the green light are close to each other, thereby saving space. In addition, compared with that in FIG. 8, a transmission direction of a light beam in FIG. 9 can be changed without need to use a reflector, leading to a simpler structure and lower costs.

The embodiments given in FIG. 5 to 9 are not according to the claimed invention. In an embodiment according to the claimed invention, the spatial light modulator component 130 includes a spatial light modulator 131 and a beam combiner 133. Three different areas of the spatial light modulator 131 are in a one-to-one correspondence with the red light, the green light, and the blue light. A CGH corresponding to a light beam of a corresponding color is loaded in each area, to implement a function of performing phase modulation on the light beam of the corresponding color, and output a converged light beam of the corresponding color. Then, the beam combiner 133 combines the red light, the green light, and the blue light into one light beam, to obtain the to-be-projected hologram. Certainly, in an embodiment, which is however not according to the claimed invention, the spatial light modulator 131 may alternatively not integrate the light beam convergence function (that is, the loaded CGH is not superimposed with a convergence function), and the convergence component implements the convergence function. This is similar to the descriptions in the foregoing embodiments.

Optionally, the projection apparatus further includes a controller 160, configured to: generate a CGH, and load the CGH onto the spatial light modulator 131. Usually, the projection apparatus further includes a drive module 170. The controller 160 controls the drive modules 170 to implement control of the three-primary-color light source 110 and the spatial light modulator 131. In the foregoing embodiments, the red light, the green light, and the blue light are respectively sent to different spatial light modulators 131 or different areas of a same spatial light modulator 131. Therefore, a CGH corresponding to each color is loaded onto a corresponding spatial light modulator 131 or a corresponding area, and the three-primary-color light source 110 and the spatial light modulator 131 do not need to be synchronously controlled. A control algorithm is simple.

Regardless of whether light of three colors reaches a same spatial light modulator at different time points, or respectively reaches different spatial light modulators or respectively reaches different areas of a same spatial light modulator, the projection apparatus provided in the foregoing embodiments may generate the to-be-projected hologram by loading the CGH onto the spatial light modulator 131, and then perform projection by using the projection lens 140. Energy utilization is high. In addition, the to-be-projected hologram may further include at least one of light intensity distribution information of a high beam headlight, light intensity distribution information of a low beam headlight, a customized pattern, and the like, so that the light projected by the projection lens 140 may include light intensity distribution when any one or more of the high beam headlight, the low beam headlight, and an intelligent projection light are turned on, and functions of the high beam headlight, the low beam headlight, and the intelligent projection light can be implemented without need to respectively use three independent optical systems. The projection apparatus has advantages of a more compact structure, a smaller size, and lower costs.

Further, the three-primary-color light source 110 may send the three-primary-color light beam to the collimation component 120 through at least one optical fiber or optical waveguide. An example in which the projection apparatus is used in a motor vehicle is used. The three-primary-color light source 110 may be remotely (for example, several meters away) placed at some other positions at which there is large space on the motor vehicle. This implements light source pooling and saves front space of the motor vehicle.

Another embodiment of the present invention provides a vehicle light, including the projection apparatus provided in the foregoing embodiments. The vehicle light integrates functions of a high beam headlight (with an ADB function), a low beam headlight, and an intelligent projection light. Illumination effect of the vehicle light is shown in FIG. 10, and functions of high beam illumination, low beam illumination, and pattern projection (for example, a snowflake pattern in FIG. 10) are all implemented. There is no need to use three independent optical systems to implement the three functions. This reduces optical components, reduces a size, and reduces costs. A structure and a function of the projection apparatus are described in the foregoing embodiments, and details are not described in this embodiment. The following focuses on a working procedure of the spatial light modulator.

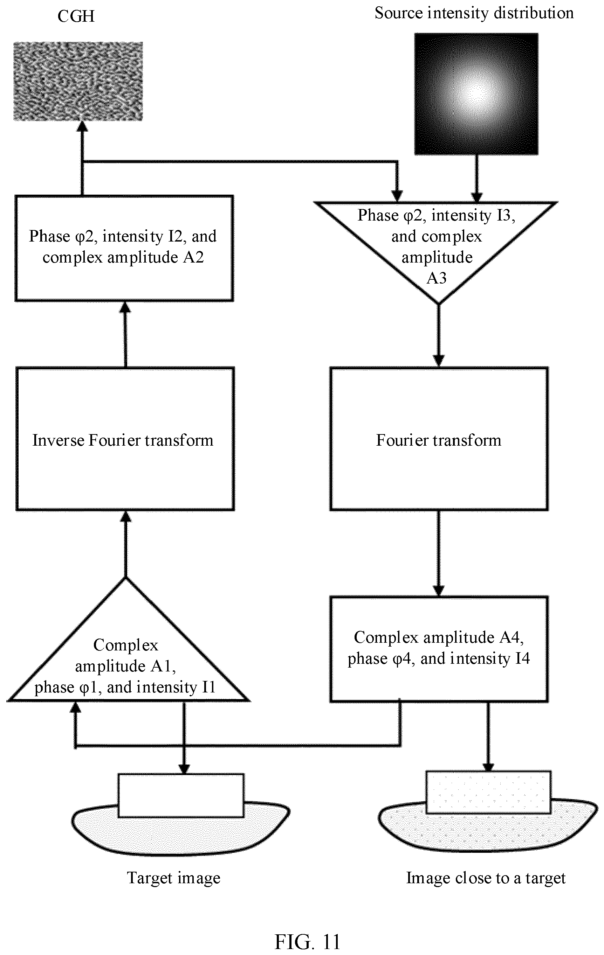

First, a CGH loaded onto the spatial light modulator is obtained, based on a target image, through iterative calculation based on a holographic algorithm. An iteration process is shown in FIG. 11. The algorithm may be implemented by a processor in an in-vehicle infotainment system, or may be implemented by a controller of the vehicle light. This is not limited in this application. Specifically, the target image may be a standard light distribution pattern of a high beam and a low beam, that is, is calculated based on a light distribution requirement of a standard high beam headlight and low beam headlight, and ideal intensity of the target image is I1 (if only the low beam is expected to be turned on by default, the target image may alternatively be a light distribution pattern of the low beam, or if only the high beam is expected to be turned on by default, the target image may alternatively be a light distribution pattern of the high beam). On this basis, an initial phase φ1 is assigned to the target image. The phase may be randomly selected to form a complex amplitude A1. Then, inverse Fourier transform is performed on the complex amplitude A1, to obtain a complex amplitude A2, and a phase φ2 and intensity I2 may be extracted from the complex amplitude A2. In this case, the phase φ2 and source intensity distribution I3 are used to form a complex amplitude A3. The source intensity distribution is intensity distribution of light emitted by the three-primary-color light source. Then, Fourier transform is performed on the complex amplitude A3, to obtain a complex amplitude A4, and a phase φ4 and intensity I4 may be extracted from the complex amplitude A4. Then, φ1 is replaced with φ4, the intensity is still the intensity I1 of the target image, and the complex amplitude A1 is formed again. In this way, iteration continues, and calculation may be stopped when a proximity degree between an intensity pattern corresponding to the complex amplitude A4 and the target image reaches a satisfaction value. For example, when a correlation between the intensity pattern and the target image reaches 50%, 60%, or at least 80%, calculation may be stopped. A specific requirement may be set based on an actual situation. This is not limited in this application. After calculation is stopped, a phase diagram corresponding to the phase φ2 obtained in a previous round of iteration is the calculated CGH. The foregoing algorithm may be a Gerchberg-Saxton algorithm (Gerchberg-Saxton, GS) based on Fourier iteration, a Gerchberg-Saxton weight algorithm (Gerchberg-Saxton Weight, GSW) based on Fourier iteration, a mixed-region-amplitude-freedom algorithm (Mixed-Region-Amplitude-Freedom, MRAF) based on Fourier iteration, an optimized algorithm based on the foregoing deformation, or the like.

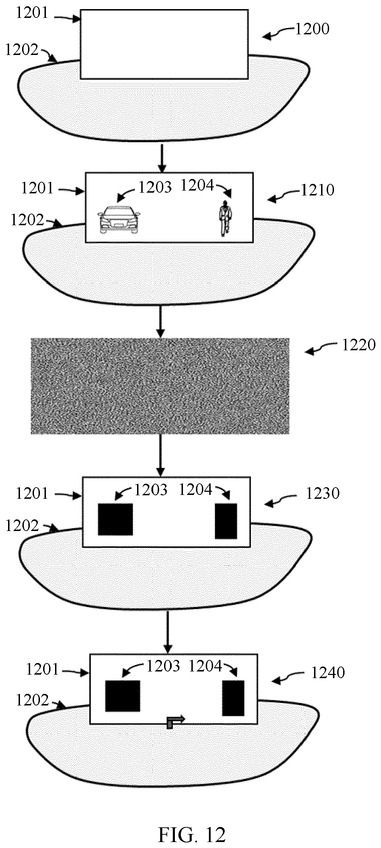

At night, when a vehicle light is turned on, a working procedure of the vehicle light is shown in FIG. 12. After the vehicle light is turned on, a default CGH is loaded onto the spatial light modulator 131 in an initial state. The default CGH is obtained, based on the target image, through iterative calculation based on a holographic algorithm. The target image may be the standard light distribution pattern of the high beam and/or the low beam. The CGH may be stored in a register. Each time the vehicle light is turned on, the CGH is read from the register by default and loaded onto the spatial light modulator. In this case, when a light source irradiates the spatial light modulator to obtain a hologram, an intensity distribution pattern of light output to the front of the vehicle by using a lens module is indicated by 1200 in FIG. 12, includes light intensity distribution 1201 of a high beam headlight and light intensity distribution 1202 of a low beam headlight, and meets a light distribution requirement. In a driving process of a motor vehicle, a sensor on the vehicle detects environment information in front of the vehicle in real time, including a vehicle, a pedestrian, a traffic light, a zebra crossing, an obstacle, an animal, and the like. Herein, a motor vehicle 1203 and a pedestrian 1204 are used as an example. After the sensor detects the motor vehicle 1203 and the pedestrian 1204, a processor in an in-vehicle infotainment system extracts contour information of the motor vehicle 1203 and contour information of the pedestrian 1204, and sets light intensity in a contour area to be 0, to obtain a new target image obtained through iteration based on the holographic algorithm. In the target image, the contour information of the motor vehicle 1203 and the contour information of the pedestrian 1204 are added based on the standard light distribution pattern of the high beam and the low beam, indicated by 1210 in FIG. 12. In this case, iterative calculation is performed based on the described holographic algorithm, to obtain a refreshed CGH 1220. The newly obtained CGH is loaded onto the spatial light modulator. After a light beam is irradiated to the spatial light modulator, a to-be-projected hologram is obtained, and then the hologram is projected. In this case, an intensity distribution pattern 1230 of light that is irradiated in front of the vehicle is close to the target image, and functions of the low beam headlight and the high beam headlight with the ADB function can be simultaneously implemented.

In addition, a warning pattern may be superimposed on the target image, to form a new target image, and then a new CGH obtained through calculation based on the holographic algorithm is loaded onto the spatial light modulator. In this case, after the light beam is irradiated to the spatial light modulator, the obtained hologram includes not only the light intensity distribution information of the low beam headlight and the light intensity distribution information of the high beam headlight with the ADB function, but also includes the warning pattern. The hologram is projected to the front of the motor vehicle by a projection lens group. Projected white light is equivalent to superimposition of a light field of the high beam headlight with the ADB function, a light field of the low beam headlight, and the warning pattern. Light intensity distribution of the projected white light is indicated by a pattern 1240 in FIG. 12 (an example in which the warning pattern is an arrow is used). In this case, the vehicle light provided in this embodiment of this application can implement functions such as high beam illumination, low beam illumination, and pattern projection by using only one projection apparatus, so that effect of separately turning on three systems (a high beam headlight, a low beam headlight, and an intelligent projection light) can be implemented, and effect of turning on all the three systems can also be implemented. This leads to a simpler structure and lower costs.

In conclusion, the vehicle light in this embodiment may be a headlight, and functions of high beam illumination, low beam illumination, and pattern projection can be implemented by using one projection apparatus. Illumination and projection may be adjusted in real time based on different road conditions, and the vehicle light is turned off for eyes of a pedestrian or a driver of an incoming vehicle, to prevent the driver and the pedestrian from being dizzy and implement the ADB function. In addition, when two vehicles are close to each other, a pattern of any shape may be projected at a specific position, and includes a warning sign, an arrow, and the like, to warn a surrounding traffic participant, thereby further improving traffic safety. In addition, the vehicle light in this embodiment may alternatively be used as another illumination apparatus on the vehicle like a tail light or an atmosphere light, and a desired pattern is projected based on a setting, for example, words "Welcome aboard" or a guest reception pattern.

An embodiment of this application discloses a vehicle, including the projection apparatus described in the foregoing embodiments. The projection apparatus is configured to provide functions of illumination and pattern projection for the vehicle, to reduce costs, improve communication and interaction with another traffic participant, so that driving is safer. The vehicle in this embodiment includes but is not limited to a motor vehicle, a ship, an airplane, and the like.

Further, the vehicle further includes a sensing apparatus, configured to detect road information. A motor vehicle is used as an example. The road information includes information such as a position and a distance of a traffic participant like an incoming vehicle, an obstacle, an animal, a traffic light, or a pedestrian. The sensing apparatus includes but is not limited to a camera device, a camera, a lidar, a millimeter-wave radar, or the like. The projection apparatus refreshes a to-be-projected hologram based on the detected road information, and projects the to-be-projected hologram, to adjust illumination and a projected pattern in real time, thereby improving driving safety.

The foregoing descriptions are merely specific implementations of this application, but are not intended to limit the protection scope of this application. Therefore, the protection scope of this application shall be subject to the protection scope of the claims.

## Claims

1. A projection apparatus, wherein the projection apparatus comprises a three-primary-color light source (110), a collimation component (120), a spatial light modulator component (130), and a projection lens (140);
the three-primary-color light source (110) is configured to send a three-primary-color light beam to the collimation component (120), wherein the three-primary-color light beam comprises red light, green light, and blue light;
the collimation component (120) is configured to: collimate the three-primary-color light beam, and send the collimated three-primary-color light beam to the spatial light modulator component (130);
the spatial light modulator component (130) is configured to: perform phase modulation on received three-primary-color light beam, and converge modulated light beams on a focal plane of the projection lens (140), to form a to-be-projected hologram; and
the projection lens (140) is configured to project the to-be-projected hologram
wherein the spatial light modulator component (130) comprises a spatial light modulator (131) and a beam combiner (133), three different areas of the spatial light modulator (131) are respectively in a one-to-one correspondence with the red light, the green light, and the blue light, and each area loads a computer generated hologram, CGH corresponding to a light beam of a corresponding color, performs phase modulation on the light beam of the corresponding color, and outputs a converged light beam of the corresponding color; and
the beam combiner (133) is configured to combine modulated red light, green light, and blue light into one beam of light, to obtain the to-be-projected hologram.

2. The projection apparatus according to claim 1, wherein a holographic plane of the spatial light modulator component (130) coincides with the focal plane of the projection lens (140).

3. The projection apparatus according to claim 1 or 2, wherein the projection apparatus (140) is applied to a vehicle, and the projection apparatus further comprises a controller (160), configured to: generate the CGH based on a signal transmitted by a sensing apparatus on the vehicle, and load the CGH onto the spatial light modulator (131).

4. The projection apparatus according to claim 3, wherein when the projection apparatus on the vehicle is turned on, the controller (160) loads an initial CGH onto the spatial light modulator (131), and then refreshes the CGH based on a signal transmitted by the sensing apparatus on the vehicle.

5. The projection apparatus according to any one of claims 1 to 4, wherein the spatial light modulator (131) is a polarization dependent device, the projection apparatus further comprises a polarization conversion system (PCS), and the PCS is located between the three-primary-color light source (110) and the spatial light modulator (131), and is configured to adjust a polarization state of light of each color output by the three-primary-color light source (110) to be consistent with a polarization state required by the spatial light modulator (131).

6. The projection apparatus according to any one of claims 1 to 5, wherein the projection apparatus is applied to a vehicle, the projection lens (140) projects the to-be-projected hologram, and the to-be-projected hologram comprises any one or more of light intensity distribution information of a high beam headlight, light intensity distribution information of a low beam headlight, and a customized pattern.

7. The projection apparatus according to any one of claims 1 to 6, wherein the projection apparatus is applied to a vehicle, and the projection lens (140) projects the to-be-projected hologram, to implement at least one function in high beam illumination, low beam illumination, and pattern projection.

8. The projection apparatus according to any one of claims 1 to 7, wherein the three-primary-color light source (110) sends the three-primary-color light beam to the collimation component (120) through at least one optical fiber or optical waveguide.

9. A vehicle, comprising the projection apparatus according to any one of claims 1 to 8.

## Patentansprüche

1. Projektionsvorrichtung, wobei die Projektionsvorrichtung eine Lichtquelle (110) mit drei Primärfarben, eine Kollimationskomponente (120), eine räumliche Lichtmodulatorkomponente (130) und eine Projektionslinse (140) umfasst;
die Lichtquelle (110) mit drei Primärfarben dazu konfiguriert ist, einen Lichtstrahl mit drei Primärfarben an die Kollimationskomponente (120) zu senden, wobei der Lichtstrahl mit drei Primärfarben rotes Licht, grünes Licht und blaues Licht umfasst;
die Kollimationskomponente (120) dazu konfiguriert ist: den Lichtstrahl mit drei Primärfarben zu kollimieren und den kollimierten Lichtstrahl mit drei Primärfarben an die räumliche Lichtmodulatorkomponente (130) zu senden;
die räumliche Lichtmodulatorkomponente (130) dazu konfiguriert ist: eine Phasenmodulation an einem empfangenen Lichtstrahl mit drei Primärfarben durchzuführen und modulierte Lichtstrahlen auf einer Brennebene der Projektionslinse (140) zu konvergieren, um ein zu projizierendes Hologramm auszubilden; und
die Projektionslinse (140) dazu konfiguriert ist, das zu projizierende Hologramm zu projizieren,
wobei die räumliche Lichtmodulatorkomponente (130) einen räumlichen Lichtmodulator (131) und einen Strahlkombinierer (133) umfasst, drei verschiedene Bereiche des räumlichen Lichtmodulators (131) jeweils in einer Eins-zu-Eins-Entsprechung mit dem roten Licht, dem grünen Licht und dem blauen Licht stehen, und jeder Bereich ein computergeneriertes Hologramm, CGH, entsprechend einem Lichtstrahl einer entsprechenden Farbe lädt, eine Phasenmodulation an dem Lichtstrahl der entsprechenden Farbe durchführt und einen konvergierten Lichtstrahl der entsprechenden Farbe ausgibt; und der Strahlkombinierer (133) dazu konfiguriert ist, moduliertes rotes Licht, grünes Licht und blaues Licht in einem Lichtstrahl zu kombinieren, um das zu projizierende Hologramm zu erlangen.

2. Projektionsvorrichtung nach Anspruch 1, wobei eine holographische Ebene der räumlichen Lichtmodulatorkomponente (130) mit der Brennebene der Projektionslinse (140) übereinstimmt.

3. Projektionsvorrichtung nach Anspruch 1 oder 2, wobei die Projektionsvorrichtung (140) auf ein Fahrzeug aufgebracht ist und die Projektionsvorrichtung ferner eine Steuerung (160) umfasst, die dazu konfiguriert ist: das CGH basierend auf einem Signal zu generieren, das durch eine Tastvorrichtung an dem Fahrzeug übertragen wird, und das CGH auf den räumlichen Lichtmodulator (131) zu laden.

4. Projektionsvorrichtung nach Anspruch 3, wobei die Steuerung (160) beim Einschalten der Projektionsvorrichtung auf dem Fahrzeug ein anfängliches CGH auf den räumlichen Lichtmodulator (131) lädt und dann das CGH basierend auf einem durch die Tastvorrichtung auf dem Fahrzeug übertragenen Signal aktualisiert.

5. Projektionsvorrichtung nach einem der Ansprüche 1 bis 4, wobei der räumliche Lichtmodulator (131) eine polarisationsabhängige Vorrichtung ist, die Projektionsvorrichtung ferner ein Polarisationsumwandlungssystem (PCS) umfasst, und sich das PCS zwischen der Lichtquelle (110) mit drei Primärfarben und dem räumlichen Lichtmodulator (131) befindet und dazu konfiguriert ist, einen Polarisationszustand des Lichts jeder Farbe, die durch die Lichtquelle (110) mit drei Primärfarben ausgegeben wird, so einzustellen, dass er mit einem Polarisationszustand übereinstimmt, der von dem räumlichen Lichtmodulator (131) benötigt wird.

6. Projektionsvorrichtung nach einem der Ansprüche 1 bis 5, wobei die Projektionsvorrichtung auf ein Fahrzeug aufgebracht wird, die Projektionslinse (140) das zu projizierende Hologramm projiziert und das zu projizierende Hologramm eine beliebige oder mehrere von Lichtintensitätsverteilungsinformationen eines Fernlichtscheinwerfers, Lichtintensitätsverteilungsinformationen eines Abblendlichtscheinwerfers und einem angepassten Muster umfasst.

7. Projektionsvorrichtung nach einem der Ansprüche 1 bis 6, wobei die Projektionsvorrichtung auf ein Fahrzeug aufgebracht ist und die Projektionslinse (140) das zu projizierende Hologramm projiziert, um mindestens eine Funktion bei Fernlichtbeleuchtung, Abblendlichtbeleuchtung und Musterprojektion zu implementieren.

8. Projektionsvorrichtung nach einem der Ansprüche 1 bis 7, wobei die Lichtquelle (110) mit drei Primärfarben den Lichtstrahl mit drei Primärfarben durch mindestens eine optische Faser oder einen Lichtwellenleiter zu der Kollimationskomponente (120) sendet.

9. Fahrzeug, umfassend die Projektionsvorrichtung nach einem der Ansprüche 1 bis 8.

## Revendications

1. Appareil de projection, dans lequel l'appareil de projection comprend une source de lumière à trois couleurs primaires (110), un composant de collimation (120), un composant de modulateur spatial de lumière (130) et une lentille de projection (140) ; la source de lumière à trois couleurs primaires (110) est configurée pour envoyer un faisceau lumineux à trois couleurs primaires au composant de collimation (120), dans lequel le faisceau lumineux à trois couleurs primaires comprend de la lumière rouge, de la lumière verte et de la lumière bleue ;
le composant de collimation (120) est configuré pour : collimater le faisceau lumineux à trois couleurs primaires et envoyer le faisceau lumineux à trois couleurs primaires collimaté au composant de modulateur spatial de lumière (130) ; le composant de modulateur spatial de lumière (130) est configuré pour : réaliser une modulation de phase sur le faisceau lumineux à trois couleurs primaires reçu, et faire converger les faisceaux lumineux modulés sur un plan focal de la lentille de projection (140), afin de former un hologramme à projeter ; et
la lentille de projection (140) est configurée pour projeter l'hologramme à projeter
dans lequel le composant de modulateur spatial de lumière (130) comprend un modulateur spatial de lumière (131) et un combinateur de faisceaux (133), trois zones différentes du modulateur spatial de lumière (131) sont respectivement en correspondance biunivoque avec la lumière rouge, la lumière verte et la lumière bleue, et chaque zone charge un hologramme généré par ordinateur, CGH, correspondant à un faisceau lumineux de la couleur correspondante, réalise une modulation de phase sur le faisceau lumineux de la couleur correspondante et produit un faisceau lumineux convergent de la couleur correspondante ; et
le combinateur de faisceaux (133) est configuré pour combiner la lumière rouge, la lumière verte et la lumière bleue modulées en un seul faisceau lumineux, afin d'obtenir l'hologramme à projeter.

2. Appareil de projection selon la revendication 1, dans lequel un plan holographique du composant de modulateur spatial de lumière (130) coïncide avec le plan focal de la lentille de projection (140).

3. Appareil de projection selon la revendication 1 ou 2, dans lequel l'appareil de projection (140) est appliqué à un véhicule, et l'appareil de projection comprend en outre un dispositif de commande (160), configuré pour : générer le CGH sur la base d'un signal transmis par un appareil de détection sur le véhicule, et charger le CGH sur le modulateur spatial de lumière (131).

4. Appareil de projection selon la revendication 3, dans lequel lorsque l'appareil de projection sur le véhicule est allumé, le dispositif de commande (160) charge un CGH initial sur le modulateur spatial de lumière (131), puis rafraîchit le CGH sur la base d'un signal transmis par l'appareil de détection sur le véhicule.

5. Appareil de projection selon l'une quelconque des revendications 1 à 4, dans lequel le modulateur spatial de lumière (131) est un dispositif dépendant de la polarisation, l'appareil de projection comprend en outre un système de conversion de polarisation (PCS), et le PCS est situé entre la source de lumière à trois couleurs primaires (110) et le modulateur spatial de lumière (131), et est configuré pour ajuster un état de polarisation de la lumière de chaque couleur produite par la source de lumière à trois couleurs primaires (110) afin qu'il soit cohérent avec un état de polarisation requis par le modulateur spatial de lumière (131).

6. Appareil de projection selon l'une quelconque des revendications 1 à 5, dans lequel l'appareil de projection est appliqué à un véhicule, la lentille de projection (140) projette l'hologramme à projeter, et l'hologramme à projeter comprend l'une quelconque ou plusieurs des informations de distribution d'intensité lumineuse d'un phare de feux de route, des informations de distribution d'intensité lumineuse d'un phare de feux de croisement, et un motif personnalisé.

7. Appareil de projection selon l'une quelconque des revendications 1 à 6, dans lequel l'appareil de projection est appliqué à un véhicule, et la lentille de projection (140) projette l'hologramme à projeter, pour mettre en œuvre au moins une fonction d'éclairage de feux de route, d'éclairage de feux de croisement, et de projection de motif.

8. Appareil de projection selon l'une quelconque des revendications 1 à 7, dans lequel la source de lumière à trois couleurs primaires (110) envoie le faisceau lumineux à trois couleurs primaires au composant de collimation (120) à travers au moins une fibre optique ou un guide d'ondes optique.

9. Véhicule, comprenant l'appareil de projection selon l'une quelconque des revendications 1 à 8.
